# EUROPEAN PATENT SPECIFICATION

(11) **EP 3 687 835 B1**
(45) Date of publication and mention of the grant of the patent: **15.05.2024**
(21) Application number: 17926874.3
(22) Date of filing: 28.09.2017
(51) Int. Cl.: B60C 19/00, B60C 5/00

(54) **A TIRE COMPRISING A VIBRATION ABSORBER**
REIFEN MIT SCHWINGUNGSDÄMPFER
PNEU COMPRENANT UN ABSORBEUR DE VIBRATIONS

(43) Date of publication of application: 05.08.2020
(73) Proprietor: Compagnie Générale des Etablissements Michelin, 63000 Clermont-Ferrand (FR)
(72) Inventor: ROTY, Gael, Tokyo 163-1073 (JP); MARDUEL, Xavier, Tokyo 163-1073 (JP); OHASHI, Tetsuo, Tokyo 163-1073 (JP)
(74) Representative: M.F.P. Michelin
(86) International application number: PCT/JP2017/035166
(87) International publication number: WO 2019/064408

(56) References cited:
- EP-A1- 1 577 123
- IT-A1- TO20 110 472
- JP-A- 2006 256 531
- JP-A- 2006 256 531
- JP-A- 2010 149 600
- JP-A- 2010 149 600
- JP-A- 2011 025 832
- US-A1- 2010 294 406
- US-A1- 2010 294 406
- US-A1- 2016 229 140

## Description

### Technical Field

The present invention relates to a tire, in particular to a tire possible to reduce vibrational noise.

### Background Art

It is known that noise emitted by a tire when rolling originates, inter alia, from vibrations of its structure following contact of the tire with uneven roadway, also giving rise to a generation of various sound waves. This is all ultimately manifested in a form of noise, both inside and outside of a vehicle. Amplitude of these various manifestations is dependent on modes of vibration characteristic of the tire but also on nature of road surface on which the vehicle is moving. A range of frequencies corresponding to the noise generated by the tire typically extends from 20 to 4,000 Hz approximately.

WO2014/137675 discloses a tire comprising a plurality of vibration absorbers affecting structural resonances of a tire for reducing noise arising from structural vibration consisting of a spring element and a mass element.

JP2006-256531 discloses a tire comprising a dynamic damper consisting of a mass element and an elastic member affecting axial deformation mode of a tire and being attached to tire sidewall. Other examples of tires provided with a mass damper for reducing noise are disclosed in IT TO20110472 A1 and EP 1577123 A1.

Recently for a purpose of tire weight reduction while maintaining or even improving handling performance, a tire having improved tread stiffness is known. However with such the tire, noise due to tire's structural vibration appears in a frequency which have not been considered problematic, and it is difficult to absorb such tire's structural vibration with the above arrangements. Also with the above arrangements, there is a problem that the vibration absorbers or the dynamic damper (both can be considered as "mass-damper") need to be installed after the tire being cured using scotch tape, glue or alike onto an internal surface of the tire, thus low in productivity of such the tire provided with vibration absorbers / dynamic damper.

### Citation List

### Patent Literature

PTL 1: WO2014/137675
PTL 2: JP2006-256531

Therefore, there is a need for a tire which makes it possible to attenuate a noise due to tire's structural vibration efficiently with improved productivity.

### Definitions:

A "radial direction/orientation" is a direction/orientation perpendicular to axis of rotation of the tire. This direction/orientation corresponds to thickness orientation of the tread.

An "axial direction/orientation" is a direction/orientation parallel to axis of rotation of the tire.

A "circumferential direction/orientation" is a direction/orientation which is tangential to any circle centered on axis of rotation. This direction/orientation is perpendicular to both the axial direction/orientation and the radial direction/orientation.

A "tire" means all types of elastic tire whether or not subjected to an internal pressure.

A "tread" of a tire means a quantity of rubber material bounded by lateral surfaces and by two main surfaces one of which is intended to come into contact with ground when the tire is rolling.

Unless otherwise specified, a range represented as "between a and b" means greater than a and less than b (does not include the upper and lower limiting numbers), and a range represented as "from a to b" represents more than or equal to a and less than or equal to b (includes the upper and lower limiting numbers).

It is thus an object of the invention to provide a tire provided with a mass-damper, such the tire can provide improvement on noise due to structural vibration with improved productivity.

### Summary of Invention

The present invention provides the tire as defined in appended claim 1. Advantageous embodiments are provided as defined in the corresponding dependent claims.

The present application also discloses a tire comprising; at least one carcass layer; at least one belt layer having an axial width W between two belt layer extremities and being placed radially outward of the at least one carcass layer; a tread having a contact face intended to come into contact with ground during rolling and being placed radially outward of the at least one belt layer; at least one mass-damper being composed of a soft part and a hard part and being placed radially inward of the at least one carcass layer, the hard part of the at least one mass-damper having at least two level faces facing to generally radial orientation of the tire, the hard part of the at least one mass-damper contacting with the soft part of the at least one mass-damper on at least radially outward one of the at least two level faces, an axial center of the hard part of the at least one mass-damper locates in a region axially from the belt layer extremity to a position axially 1/3 of the width W inwardly from the belt layer extremity.

This arrangement provides improvement of noise performance and productivity simultaneously.

Since the at least one mass-damper is composed of a soft part and a hard part and is placed radially inward of the at least one carcass layer, the hard part of the at least one mass-damper has at least two level faces facing to generally radial orientation of the tire, the hard part of the at least one mass-damper contacts with the soft part of the at least one mass-damper on at least radially outward one of the at least two level faces, the mass-damper is suitable to absorb tire's structural vibration due to improved tread stiffness that has a vibration mode in shearing (generally tire axial) orientation, thus noise due to tire's structural vibration can be improved.

Also at the same time, since an axial center of the hard part, axially middle between two axially extremities of the hard part, of the at least one mass-damper locates in a region axially from the belt layer extremity to a position axially 1/3 of the width W inwardly from the belt layer extremity, as such the vibration mode generates maximum displacement in shearing (generally tire axial) orientation in such the region, the mass-damper can further effectively absorb tire's structural vibration due to improved tread stiffness that has the vibration mode in shearing (generally tire axial) orientation, thus noise due to tire's structural vibration can further be improved.

Since this location of the mass-damper, the axial center of the hard part of the at least one mass-damper locates in the region axially from the belt layer extremity to the position axially 1/3 of the width W inwardly from the belt layer extremity, is the location where a movement of a molding by membrane generates less geometrical change during molding, thus the mass-damper is possible to install onto a green tire before curing which is possible to eliminate an installation operation after curing, thus productivity of the tire provided with the mass-damper can be improved.

According to another aspect of the disclosure, the tire has at least two belt layers comprising a second belt layer being positioned radially outwardly next to a radially innermost belt layer, and the axial center of the hard part of the at least one mass-damper locates in a region axially from a position axially 10% of the width W of the second belt layer inwardly from the belt layer extremity of the second belt layer to a position axially 10% of the width W of the second belt layer outwardly from the belt layer extremity of the second belt layer or to axially inward of the belt layer extremity of the widest belt layer in the at least two belt layers whichever is axially inward.

According to this arrangement, it is possible to absorb tire's structural vibration due to improved tread stiffness, as the vibration mode generates maximum displacement in shearing (generally tire axial) orientation in particular in such the region, thus noise due to tire's structural vibration can further be improved.

On the other words, if the axial center of the hard part of the at least one mass-damper locates out of the above region, there is a risk that absorption of tire's structural vibration due to improved tread stiffness would be insufficient thus noise due to tire's structural vibration cannot be improved.

According to another aspect of the disclosure, a ratio between a Young modulus Ys of the soft part and a Young modulus Yh of the hard part of the mass-damper (Ys/Yh) is at most equal to 0.2.

If this ratio of Young modulus is more than 0.2, there is a risk that the hard part is not possible to act as a mass element of the mass-damper, which leads insufficient absorption of tire's structural vibration due to improved tread stiffness thus noise due to tire's structural vibration cannot be improved. By setting this ratio at most equal to 0.2, the hard part can act as the mass element and the soft part can act as a spring element of the mass-damper correctly, thus noise due to tire's structural vibration can further be improved.

This ratio of the Young modulus Ys of the soft part and the Young modulus Yh of the hard part of the mass-damper (Ys/Yh) is preferably at most equal to 0.18, more preferably at most equal to 0.15 and still more preferably at most equal to 0.12.

According to another aspect of the disclosure, a ratio between a material density Dh of the hard part and a material density Ds of the soft part of the mass-damper (Dh/Ds) is at least equal to 1.7.

If this ratio of material density is less than 1.7, there is a risk that the hard part is not possible to act as a mass element of the mass-damper, or the soft part is not possible to act as a spring element of the mass-damper, which leads insufficient absorption of tire's structural vibration due to improved tread stiffness thus noise due to tire's structural vibration cannot be improved. By setting this ratio at least equal to 1.7, the hard part can act as the mass element and the soft part can act as a spring element of the mass-damper correctly, thus noise due to tire's structural vibration can further be improved.

This ratio of material density is preferably at least equal to 1.8, more preferably at least equal to 2.0.

According to another aspect of the disclosure, all the at least two level faces of the hard part of the mass-damper contact with the soft part of the mass-damper.

According to this arrangement, it is possible to ease handling of a green product during manufacturing of the tire as the soft part as to surrounding the hard part would prevent detachment of the hard part thus productivity of such the tire can further be improved.

According to another aspect of the disclosure, the tire has two mass-dampers.

According to this arrangement, it is possible to absorb tire's structural vibration due to improved tread stiffness more effectively and efficiently, thus noise due to tire's structural vibration can further be improved.

According to another aspect of the disclosure, a resonance frequency of the mass-damper (5) is between 600 Hz and 700 Hz.

According to this arrangement, it is possible to absorb tire's structural vibration due to improved tread stiffness more effectively and efficiently, as such a tire's structural vibration frequency appears around 650 Hz, thus noise due to tire's structural vibration can further be improved.

### Advantageous Effects of Invention

According to the arrangements described above, it is possible to provide a tire with a mass-damper, such the tire can provide improvement on noise due to structural vibration with improved productivity of such the tire.

### Brief Description of Drawings

Other characteristics and advantages of the invention arise from the description made hereafter in reference to the annexed drawings which show, as nonrestrictive examples, the embodiment of the invention.

In these drawings:
[fig.1]Fig. 1 is a schematic cross sectional view of a portion of a tire according to a first embodiment of the present invention;
[fig.2]Fig. 2 is a schematic cross sectional view of a portion of a tire according to a second embodiment of the present invention;
[fig.3]Fig. 3 is a schematic cross sectional view of a portion of a tire according to a third embodiment of the present invention;

### Description of Embodiments

Preferred embodiments of the present invention will be described below referring to the drawings.

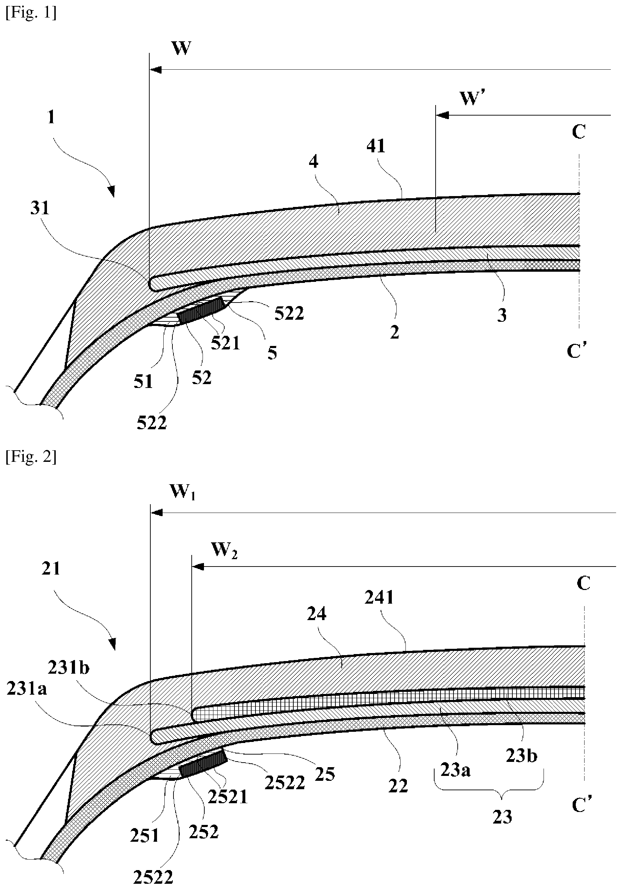

A tire 1 according to a first embodiment of the present invention will be described referring to Fig. 1.

Fig. 1 is a schematic cross sectional view of a portion of a tire according to a first embodiment of the present invention. The tire 1 shown in this figure 1 is a half of so-called summit portion divided with respect to a center line C-C'.

The tire 1 is a tire having dimension 205/55R16 provided with at least one carcass layer 2, a main body of the tire which may or may not be provided with an inner liner for inhibiting loss of air pressure, and at least one belt layer 3 being placed radially outward of the at least one carcass layer 2, a rubber-coated layer of metallic or textile or other material in a form of cable or wire or strings having an axial width W between two belt layer extremities 31, an axially outer most of the belt layer 3, and a tread 4 having a contact face 41 intended to come into contact with ground during rolling and being placed radially outward of the at least one belt layer 3.

As shown in Fig. 1, the tire 1 is provided also with at least one mass-damper 5 being composed of a soft part 51 which acts as a spring element of the mass-damper 5 and a hard part 52 which acts as a mass element of the mass-damper 5, being placed radially inward of the at least one carcass layer 2.

As shown in Fig. 1, the hard part 52 of the at least one mass-damper 5 has at least two level faces 521 facing to generally radial orientation of the tire and two upright faces 522 facing to generally axial orientation of the tire, the hard part 52 of the at least one mass-damper 5 contacting with the soft part 51 of the at least one mass-damper 5 on radially outward one of the at least two level face 521 and on two upright faces 522, as to surround radially outward portion of the hard part 52 by the soft part 51 so that the hard part 52 of the mass-damper 5 has no direct contact with the carcass layer 2 or the inner liner when exists.

As shown in Fig. 1, the at least one mass-damper 5 is attached to the tire 1 as to an axial center of the hard part 52 of the at least one mass-damper 5 locates in a region axially between the belt layer extremity 31 and a position axially 1/3 of the width W inwardly from the belt layer extremity 31, which denotes as W' in this figure 1.

A ratio between a Young modulus Ys of the soft part 51 and a Young modulus Yh of the hard part 52 of the mass-damper 5 (Ys/Yh) is at most equal to 0.2. In this embodiment the Young modulus Ys of the soft part 51 is 0.2 MPa and the Young modulus Yh of the hard part 52 is 2.0 MPa, thus the ratio between the Young modulus Ys of the soft part 51 and the Young modulus Yh of the hard part 52 (Ys/Yh) is 0.1.

This ratio of the Young modulus Ys of the soft part 51 and the Young modulus Yh of the hard part 52 of the mass-damper (Ys/Yh) is preferably at most equal to 0.18, more preferably at most equal to 0.15 and still more preferably at most equal to 0.12.

A ratio between a material density Dh of the hard part 52 and a material density Ds of the soft part 51 of the mass-damper 5 (Dh/Ds) is at least equal to 1.7. In this embodiment the material density Dh of the hard part 52 is 2.5 g/cm³ and the material density Ds of the soft part 51 is 0.9 g/cm³, thus the ratio between the material density Dh of the hard part 52 and the material density Ds of the soft part 51 of the mass-damper 5 (Dh/Ds) is 2.78.

This ratio between the material density Dh of the hard part 52 and the material density Ds of the soft part 51 of the mass-damper 5 (Dh/Ds) is preferably at least equal to 1.8, more preferably at least equal to 2.0.

Since the at least one mass-damper 5 is composed of a soft part 51 and a hard part 52 and is placed radially inward of the at least one carcass layer 2, the hard part 51 of the at least one mass-damper 5 has at least two level faces 521 facing to generally radial orientation of the tire, the hard part 52 of the at least one mass-damper 5 contacts with the soft part 51 of the at least one mass-damper 5 on at least radially outward one of the at least two level faces 521, the mass-damper 5 is suitable to absorb tire's structural vibration due to improved tread stiffness that has a vibration mode in shearing (generally tire axial) orientation, thus noise due to tire's structural vibration can be improved.

Also at the same time, since an axial center of the hard part 52 of the at least one mass-damper 5 locates in a region axially from the belt layer extremity 31 to a position axially 1/3 of the width W inwardly from the belt layer extremity 31, as such the vibration mode generates maximum displacement in shearing (generally tire axial) orientation in such the region, the mass-damper 5 can further effectively absorb tire's structural vibration due to improved tread stiffness that has the vibration mode in shearing (generally tire axial) orientation, thus noise due to tire's structural vibration can further be improved.

Since this location of the mass-damper 5, the axial center of the hard part 52 of the at least one mass-damper 5 locates in the region axially from the belt layer extremity 31 to the position axially 1/3 of the width W inwardly from the belt layer extremity 31, is the location where a movement of a molding by membrane generates less geometrical change during molding, thus the mass-damper 5 is possible to install onto a green tire before curing which is possible to eliminate an installation operation after curing, thus productivity of the tire provided with the mass-damper can be improved.

Since the ratio between the Young modulus Ys of the soft part 51 and the Young modulus Yh of the hard part 52 of the mass-damper 5 (Ys/Yh) is at most equal to 0.2, the hard part 52 can act as the mass element and the soft part 51 can act as a spring element of the mass-damper 5 correctly, thus noise due to tire's structural vibration can further be improved.

If this ratio of Young modulus is more than 0.2, there is a risk that the hard part 52 is not possible to act as a mass element of the mass-damper 5, which leads insufficient absorption of tire's structural vibration due to improved tread stiffness thus noise due to tire's structural vibration cannot be improved.

Since the ratio between the material density Dh of the hard part 52 and the material density Ds of the soft part 51 of the mass-damper 5 (Dh/Ds) is at least equal to 1.7, the hard part 52 can act as the mass element and the soft part 51 can act as a spring element of the mass-damper 5 correctly, thus noise due to tire's structural vibration can further be improved.

If this ratio of material density is less than 1.7, there is a risk that the hard part 52 is not possible to act as a mass element of the mass-damper 5, or the soft part 51 is not possible to act as a spring element of the mass-damper 5, which leads insufficient absorption of tire's structural vibration due to improved tread stiffness thus noise due to tire's structural vibration cannot be improved.

A resonance frequency of the mass-damper 5 is between 600 Hz and 700 Hz. In this embodiment the resonance frequency of the mass-damper 5 is set at 650 Hz for absorbing tire's structural vibration due to improved tread stiffness more effectively and efficiently, as such a tire's structural vibration frequency appears around 650 Hz.

The tire may have two mass-dampers 5 for more effective and efficient absorption of tire's structural vibration due to improved tread stiffness, symmetrically or asymmetrically with respect to the center line C-C'.

The mass-damper 5 may be provided continuously in circumferential orientation, may be provided discontinuously in circumferential orientation, or may be provided circumferentially continuous soft part 51 with circumferentially discontinuous hard part 52. The mass-damper 5 may be extending circumferentially in straight, waved or zigzagged manner.

The mass-damper 5 may be attached to the carcass layer 2, or to the inner liner if exists, or may be installed between the carcass layer 2 and the inner liner.

A tire 21 according to a second embodiment of the present invention will be described referring to Fig. 2. Fig. 2 is a schematic cross sectional view of a portion of the tire 21 according to the second embodiment of the present invention. The constitution of the second embodiment is similar to that of the first embodiment other than the arrangement shown in Fig. 2, thus description will be made referring to Fig. 2.

In the second embodiment, 2 belt layers 23 being placed radially outward of the at least one carcass layer 22, a first belt layer 23a and a second belt layer 23b, the second belt layer 23b is positioned radially outwardly next to a radially innermost belt layer, the first belt layer 23a, and a tread 24 having a contact face 241 intended to come into contact with ground during rolling and being placed radially outward of the 2 belt layers 23. The first belt layer 23a and the second belt layer 23b have a different axial width, W₁ between two belt layer extremities 231a and W₂ between two belt layer extremities 231b respectively, and axial width W₂ of the second belt layer 23b is narrower than axial width W₁ of the first belt layer 23a.

As shown in Fig. 2, the tire 21 is provided also with at least one mass-damper 25 being composed of a soft part 251 which acts as a spring element of the mass-damper 25 and a hard part 252 which acts as a mass element of the mass-damper 25, being placed radially inward of the at least one carcass layer 22.

As shown in Fig. 2, the hard part 252 of the at least one mass-damper 25 has at least two level faces 2521 facing to generally radial orientation of the tire and two upright faces 2522 facing to generally axial orientation of the tire, the hard part 252 of the at least one mass-damper 25 contacting with the soft part 251 of the at least one mass-damper 25 on radially outward one of the at least two level face 2521 and on axially outward one of the two upright faces 2522, and the hard part 252 of the mass-damper 25 has no direct contact with the carcass layer 22 or the inner liner when exists.

As shown in Fig. 2, the at least one mass-damper 25 is attached to the tire 21 as to an axial center of the hard part 252 of the at least one mass-damper 25 locates in a region axially from a position axially 10% of the width W(W2) of the second belt layer 23b inwardly from the belt layer extremity 231b of the second belt layer 23b to a position axially 10% of the width W(W2) of the second belt layer 231b outwardly from the belt layer extremity 231b of the second belt layer 23b or to axially inward of the belt layer extremity of the widest belt layer in the at least two belt layers 23 whichever is axially inward. In this embodiment the widest belt layer is the first belt layer 23a.

Since the tire 21 has at least two belt layers 23 comprising the second belt layer 23b being positioned radially outwardly next to a radially innermost belt layer (the first belt layer 23a) and the at least one mass-damper 25 is attached to the tire 21 as to an axial center of the hard part 252 of the at least one mass-damper 25 locates in a region axially from a position axially 10% of the width W(W2) of the second belt layer 23b inwardly from the belt layer extremity 231b of the second belt layer 23b to a position axially 10% of the width W(W2) of the second belt layer 231b outwardly from the belt layer extremity 231b of the second belt layer 23b or to axially inward of the belt layer extremity of the widest belt layer in the at least two belt layers 23 whichever is axially inward. In this embodiment the widest belt layer is the first belt layer 23a, it is possible to absorb tire's structural vibration due to improved tread stiffness, as the vibration mode generates maximum displacement in shearing (generally tire axial) orientation in particular in such the region, thus noise due to tire's structural vibration can further be improved.

As the hard part 252 of the at least one mass-damper 25 contacting with the soft part 251 of the at least one mass-damper 5 on radially outward one of the at least two level face 2521 and on axially outward one of the two upright faces 522, it is possible to minimize an impact on mass increase due to installation of the mass-damper 25 while keeping improved noise performance and productivity of the tire 21.

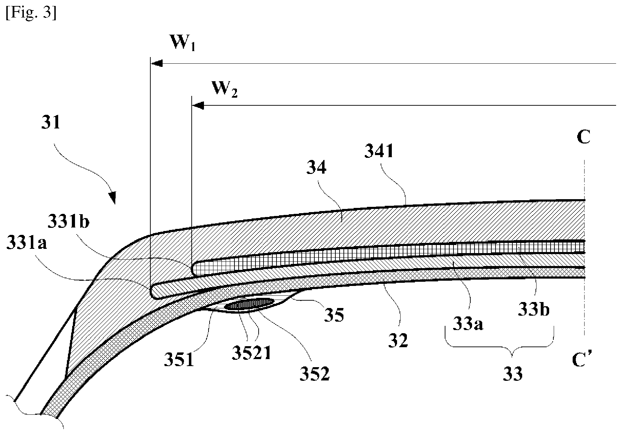

A tire 31 according to a third embodiment of the present invention will be described referring to Fig. 3. Fig. 3 is a schematic cross sectional view of a portion of the tire 31 according to the third embodiment of the present invention. The constitution of the third embodiment is similar to that of the first and the second embodiments other than the arrangement shown in Fig. 3, thus description will be made referring to Fig. 3.

In the third embodiment, 2 belt layers 33 being placed radially outward of the at least one carcass layer 32, a first belt layer 33a and a second belt layer 33b, the second belt layer 33b is positioned radially outwardly next to a radially innermost belt layer, the first belt layer 33a, and a tread 34 having a contact face 341 intended to come into contact with ground during rolling and being placed radially outward of the 2 belt layers 33. The first belt layer 33a and the second belt layer 33b have a different axial width, W₁ between two belt layer extremities 331a and W₂ between two belt layer extremities 331b respectively, and axial width W₂ of the second belt layer 33b is narrower than axial width W₁ of the first belt layer 33a.

As shown in Fig. 3, the tire 31 is provided also with at least one mass-damper 35 being composed of a soft part 351 which acts as a spring element of the mass-damper 35 and a hard part 352 which acts as a mass element of the mass-damper 35, being placed radially inward of the at least one carcass layer 32.

As shown in Fig. 3, the hard part 352 of the at least one mass-damper 35 has at least two level faces 3521 facing to generally radial orientation of the tire, all the at least two level faces 3521 of the hard part 352 of the mass-damper 35 contact with the soft part 351 of the mass-damper 35, as to surrounding completely the hard part 352 of the mass-damper 35 via the soft part 351, and the hard part 352 of the mass-damper 35 has no direct contact with the carcass layer 32 or the inner liner when exists.

As shown in Fig. 3, the at least one mass-damper 35 is attached to the tire 31 as to an axial center of the hard part 352 of the at least one mass-damper 35 locates in a region axially from a position axially 10% of the width W(W₂) of the second belt layer 33b inwardly from the belt layer extremity 331b of the second belt layer 33b to a position axially 10% of the width W(W₂) of the second belt layer 331b outwardly from the belt layer extremity 331b of the second belt layer 33b or to axially inward of the belt layer extremity of the widest belt layer in the at least two belt layers 33 whichever is axially inward. In this embodiment the widest belt layer is the first belt layer 33a.

Since all the at least two level faces 3521 of the hard part 352 of the mass-damper 35 contact with the soft part 351 of the mass-damper 35, it is possible to ease handling of a green product during manufacturing of the tire 31 as the soft part 351 as to surrounding the hard part 352 would prevent detachment of the hard part 352 thus productivity of such the tire 31 can further be improved.

### Examples

In order to confirm the effect of the present invention, one type of a tire of Example to which the present invention is applied and another type of tire of Reference were prepared.

The Example was a tire as described in the above second embodiment. The Reference was a tire having the same construction as Example but without mass-damper. All the Example and Reference were made of the same rubber-based material, typical rubber-based material used for passenger car tire.

The tire dimension of Example and Reference were both 205/55R16, mounted onto a rim of 6.5J×16, and inflated to 180 kPa.

### Noise performance test:

A sound pressure level of the unused test tires mounted onto abovementioned rim, inflated to abovementioned internal pressure were measured while applying a load of 452daN, running 90kph on a drum of 2.7m in diameter having ISO surface in a semi anechoic chamber, via a microphone installed axially 1m outward from a center of tire contact, radially 0.2m backward from a tire rolling axis and 0.32m in height.

The result shows 0.3 dBA improvement in overall sound pressure level with the Example over the Reference, with more than 5 dBA improvement in sound pressure level in a range from 500 Hz to 700 Hz.

The invention is not limited to the examples described and represented and only defined by the appended claims.

### Reference Signs List

1, 21, 31 tire
2, 22, 32 carcass layer
3, 23, 33 belt layer
31, 231, 331 belt layer extremity
4, 24, 34 tread
41, 241, 341 contact face
5, 25, 35 mass-damper
51, 251, 351 soft part of mass-damper
52, 252, 352 hard part of mass-damper
521, 2521, 3521 level face of hard part
522, 2522 upright face of hard part

## Claims

1. A tire (1) comprising; at least one carcass layer (2); at least one belt layer (3) having an axial width (W) between two belt layer extremities (31) and being placed radially outward of the at least one carcass layer (2); a tread (4) having a contact face (41) intended to come into contact with ground during rolling and being placed radially outward of the at least one belt layer (3); at least one mass-damper (5) being composed of a soft part (51) and a hard part (52) and being placed radially inward of the at least one carcass layer (2),
the hard part (52) of the at least one mass-damper (5) having at least two level faces (521) facing to generally radial orientation of the tire, the hard part (52) of the at least one mass-damper (5) contacting with the soft part (51) of the at least one mass-damper (5) on at least radially outward one of the at least two level faces (521), the hard part (52) of the at least one mass-damper (5) having two upright faces (522) connecting the two level faces (521) respectively and facing to generally axial orientation of the tire,
wherein an axial center of the hard part (52) of the at least one mass-damper (5) is located in a region axially from the belt layer extremity (31) to a position axially 1/3 of the width (W) inwardly from the belt layer extremity (31),
the tire (1) being **characterized in that**
the soft part (51) acts as a spring element of the mass-damper (5) and the hard part (52) acts as a mass element of the mass-damper (5), and **in that**
the hard part (52) of the at least one mass-damper (5) contacts with the soft part (51) of the at least one mass-damper (5) on at least one of the upright faces (522) of the hard part (52) facing axially outward so as to surround a radially outward portion of the hard part (52) by the soft part (51).

2. The tire (1) according to claim 1, **wherein** the tire (1) has at least two belt layers (3) comprising a second belt layer being positioned radially outwardly next to a radially innermost belt layer, and **wherein** the axial center of the hard part (52) of the at least one mass-damper (5) is located in a region axially from a position axially 10% of the width (W) of the second belt layer inwardly from the belt layer extremity of the second belt layer to a position axially 10% of the width (W) of the second belt layer outwardly from the belt layer extremity of the second belt layer or to axially inward of the belt layer extremity (31) of the widest belt layer in the at least two belt layers (3) whichever is axially inward.

3. The tire (1) according to claim 1 or claim 2, **wherein** a ratio between a Young modulus (Ys) of the soft part (51) and a Young modulus (Yh) of the hard part (52) of the mass-damper (5) (Ys/Yh) is at most equal to 0.2.

4. The tire (1) according to any one of the claims 1 to 3, **wherein** a ratio between a material density (Dh) of the hard part (52) and a material density (Ds) of the soft part (51) of the mass-damper (5) (Dh/Ds) is at least equal to 1.7.

5. The tire (1) according to any one of the claims 1 to 4, **wherein** all the at least two level faces (521) of the hard part (52) of the mass-damper (5) contact with the soft part (51) of the mass-damper (5).

6. The tire (1) according to any one of the claims 1 to 5, **wherein** the tire (1) has two mass-dampers (5).

7. The tire (1) according to any one of the claims 1 to 6, **wherein** a resonance frequency of the mass-damper (5) is between 600 Hz and 700 Hz.

## Patentansprüche

1. Reifen (1), umfassend; mindestens eine Karkassenschicht (2); mindestens eine Gürtelschicht (3), die eine axiale Breite (W) zwischen zwei Gürtelschichtendpunkten (31) aufweist und radial auswärts von der mindestens einen Karkassenschicht (2) angeordnet ist; eine Lauffläche (4), die eine Kontaktfläche (41) aufweist, die während eines Rollens mit dem Boden in Kontakt kommen soll und radial auswärts von der mindestens einen Gürtelschicht (3) angeordnet ist; mindestens einen Massendämpfer (5), der aus einem weichen Teil (51) und einem harten Teil (52) besteht und radial einwärts von der mindestens einen Karkassenschicht (2) angeordnet ist,
wobei der harte Teil (52) des mindestens einen Massendämpfers (5) mindestens zwei waagrechte Flächen (521) aufweist, die zu einer im Allgemeinen radialen Ausrichtung des Reifens weisen, wobei der harte Teil (52) des mindestens einen Massendämpfers (5) mit dem weichen Teil (51) des mindestens einen Massendämpfers (5) auf mindestens einer radial außenliegenden der mindestens zwei waagrechten Flächen (521) in Kontakt steht, wobei der harte Teil (52) des mindestens einen Massendämpfers (5) zwei senkrechte Flächen (522) aufweist, welche die zwei waagrechten Flächen (521) jeweils verbinden und zu einer im Allgemeinen axialen Ausrichtung des Reifens weisen,
wobei sich eine axiale Mitte des harten Teils (52) des mindestens einen Massendämpfers (5) in einem Bereich axial von dem Gürtelschichtendpunkt (31) zu einer Position axial 1/3 der Breite (W) einwärts von dem Gürtelschichtendpunkt (31) befindet,
wobei der Reifen (1) **dadurch gekennzeichnet ist, dass** der weiche Teil (51) als ein Federelement des Massendämpfers (5) dient und der harte Teil (52) als ein Massenelement des Massendämpfers (5) dient, und dadurch, dass
der harte Teil (52) des mindestens einen Massendämpfers (5) mit dem weichen Teil (51) des mindestens einen Massendämpfers (5) auf mindestens einer der senkrechten Flächen (522) des harten Teils (52), die axial nach außen weist, in Kontakt steht, so dass ein radial außenliegender Abschnitt des harten Teils (52) von dem weichen Teil (51) umgeben ist.

2. Reifen (1) nach Anspruch 1, wobei der Reifen (1) mindestens zwei Gürtelschichten (3) aufweist, die eine zweite Gürtelschicht umfassen, die radial auswärts neben einer radial innersten Gürtelschicht positioniert ist, und wobei sich die axiale Mitte des harten Teils (52) des mindestens einen Massendämpfers (5) in einem Bereich axial von einer Position axial 10 % der Breite (W) der zweiten Gürtelschicht einwärts von dem Gürtelschichtendpunkt der zweiten Gürtelschicht zu einer Position axial 10 % der Breite (W) der zweiten Gürtelschicht auswärts von dem Gürtelschichtendpunkt der zweiten Gürtelschicht oder bis axial einwärts von dem Gürtelschichtendpunkt (31) der breitesten Gürtelschicht in den mindestens zwei Gürtelschichten (3), je nachdem, welche axial innen liegt, befindet.

3. Reifen (1) nach Anspruch 1 oder Anspruch 2, wobei ein Verhältnis zwischen einem Elastizitätsmodul (Ys) des weichen Teils (51) und einem Elastizitätsmodul (Yh) des harten Teils (52) des Massendämpfers (5) (Ys/Yh) höchstens gleich 0,2 ist.

4. Reifen (1) nach einem der Ansprüche 1 bis 3, wobei ein Verhältnis zwischen einer Materialdichte (Dh) des harten Teils (52) und einer Materialdichte (Ds) des weichen Teils (51) des Massendämpfers (5) (Dh/Ds) mindestens gleich 1,7 ist.

5. Reifen (1) nach einem der Ansprüche 1 bis 4, wobei alle der mindestens zwei waagrechten Flächen (521) des harten Teils (52) des Massendämpfers (5) mit dem weichen Teil (51) des Massendämpfers (5) in Kontakt stehen.

6. Reifen (1) nach einem der Ansprüche 1 bis 5, wobei der Reifen (1) zwei Massendämpfer (5) aufweist.

7. Reifen (1) nach einem der Ansprüche 1 bis 6, wobei eine Resonanzfrequenz des Massendämpfers (5) zwischen 600 Hz und 700 Hz liegt.

## Revendications

1. Pneumatique (1) comprenant ; au moins une couche de carcasse (2) ; au moins une couche de ceinture (3) ayant une largeur axiale (W) entre deux extrémités de la couche de ceinture (31) et placée radialement à l'extérieur de la au moins une couche de carcasse (2) ; une bande de roulement (4) ayant une face de contact (41) destinée à entrer en contact avec le sol pendant le roulement et placée radialement à l'extérieur de la au moins une couche de ceinture (3) ; au moins un amortisseur massique (5) composé d'une partie souple (51) et d'une partie dure (52) et placé radialement à l'intérieur de la au moins une couche de carcasse (2),
la partie dure (52) de l'au moins un amortisseur massique (5) ayant au moins deux faces horizontales (521) faisant face à l'orientation généralement radiale du pneumatique, la partie dure (52) de l'au moins un amortisseur massique (5) entrant en contact avec la partie souple (51) de l'au moins un amortisseur massique (5) sur au moins une des deux faces horizontales (521) orientée radialement vers l'extérieur, la partie dure (52) de l'au moins un amortisseur massique (5) ayant deux faces verticales (522) reliant les deux faces horizontales (521) respectivement et faisant face à l'orientation généralement axiale du pneumatique,
dans lequel un centre axial de la partie dure (52) du au moins un amortisseur massique (5) est situé dans une région allant axialement de l'extrémité de la couche de ceinture (31) à une position axialement égale à 1/3 de la largeur (W) vers l'intérieur de l'extrémité de la couche de ceinture (31),
le pneumatique (1) étant **caractérisé en ce que** la partie souple (51) agit comme un élément de ressort de l'amortisseur massique (5) et la partie dure (52) agit comme un élément massique de l'amortisseur massique (5), et **en ce que** la partie dure (52) de l'au moins un amortisseur massique (5) entre en contact avec la partie souple (51) de l'au moins un amortisseur massique (5) sur au moins une des faces verticales (522) de la partie dure (52) orientée axialement vers l'extérieur de manière à entourer une partie radialement extérieure de la partie dure (52) par la partie souple (51).

2. Pneumatique (1) selon la revendication 1, **dans lequel** le pneumatique (1) a au moins deux couches de ceinture (3) comprenant une deuxième couche de ceinture positionnée radialement vers l'extérieur à côté d'une couche de ceinture radialement la plus intérieure, et **dans lequel** le centre axial de la partie dure (52) de l'au moins un amortisseur massique (5) est situé dans une zone allant axialement d'une position correspondant à 10 % de la largeur (W) de la deuxième couche de ceinture vers l'intérieur de l'extrémité de la deuxième couche de ceinture à une position correspondant à 10 % de la largeur (W) de la deuxième couche de ceinture vers l'extérieur de l'extrémité de la deuxième couche de ceinture ou axialement vers l'intérieur de l'extrémité de la couche de ceinture (31) de la couche de ceinture la plus large des deux couches de ceinture (3) selon laquelle est axialement vers l'intérieur.

3. Pneumatique (1) selon la revendication 1 ou la revendication 2, **dans lequel** un rapport entre un module d'Young (Ys) de la partie souple (51) et un module d'Young (Yh) de la partie dure (52) de l'amortisseur massique (5) (Ys/Yh) est au plus égal à 0,2.

4. Pneumatique (1) selon l'une quelconque des revendications 1 à 3, **dans lequel** un rapport entre une densité de matière (Dh) de la partie dure (52) et une densité de matière (Ds) de la partie souple (51) de l'amortisseur massique (5) (Dh/Ds) est au moins égal à 1,7.

5. Pneumatique (1) selon l'une quelconque des revendications 1 à 4, **dans lequel** toutes les au moins deux faces horizontales (521) de la partie dure (52) de l'amortisseur massique (5) sont en contact avec la partie souple (51) de l'amortisseur massique (5).

6. Pneumatique (1) selon l'une quelconque des revendications 1 à 5, **dans lequel** le pneumatique (1) a deux amortisseurs massiques (5).

7. Pneumatique (1) selon l'une quelconque des revendications 1 à 6, **dans lequel** la fréquence de résonance de l'amortisseur massique (5) est comprise entre 600 Hz et 700 Hz.
